# EUROPEAN PATENT SPECIFICATION

(11) **EP 1 264 007 B1**
(45) Date of publication and mention of the grant of the patent: **20.07.2011**
(21) Application number: 01914418.7
(22) Date of filing: 21.02.2001
(51) Int. Cl.: C23F 11/12, C23F 11/14, C23F 11/167

(54) **Metal oxides dispersant composition**
Metalloxid-Dispergiermittelzusammensetzung.
Composition de dispersion d'oxydes métalliques

(30) Priority: 29.02.2000 US 185828 P
(43) Date of publication of application: 11.12.2002
(73) Proprietor: Ashland Licensing and Intellectual Property LLC, Dublin, OH 43017 (US)
(72) Inventor: BEARWOOD, Edward, S., Aurora, Ontario L4G 4Z4 (CA); CHARKHUTIAN, Kostan, B., Westwood, NJ 07675 (US)
(74) Representative: Vossius & Partner
(86) International application number: PCT/US2001/005440
(87) International publication number: WO 2001/064972

(56) References cited:
- US-A- 4 487 745
- US-A- 5 047 094
- US-A- 5 264 155
- US-A- 5 876 623
- RUMPF REGIS R ET AL: "No single answer controls corrosion" POWER ENG BARRINGTON ILL; POWER ENGINEERING (BARRINGTON, ILLINOIS) JAN 1993, vol. 97, no. 1, January 1993 (1993-01), pages 33-35, XP009098802
- CAPPABIANCA CARL J ET AL: "EXPERIENCE WITH A NOVEL, VOLATILE BOILER WATER OXYGEN SCAVENGER" ANNU MEET INT WATER CONF 1985 ENGINEERS' SOC OF WESTERN PENNSYLVANIA, PITTSBURGH, PA, USA, 1985, pages 558-565, XP009098803

## Description

### CLAIM TO PRIORITY

Applicants claim the priority date of provisional application serial number 60/185828, filed on February 29, 2000.

### FIELD OF THE INVENTION

This invention relates to metal oxides dispersant compositions comprising (a) a specific metal oxides dispersant, and (b) an oxime. The invention also relates to a process for dispersing metal oxides in an aqueous system that involves adding the dispersant composition to the aqueous system.

### BACKGROUND OF THE INVENTION

The mitigation of corrosion in steam generating systems is vital to the continued efficient operation of the system. The formation of metal oxides on metal surfaces, particularly iron oxide, results in reduced heat transfer rates. These insulating deposits result in an increased metal temperature which, over time, result in creep failure of the metal. Unfortunately, these deposits are also somewhat porous which can lead to evaporative concentration of other salts within the deposit-undergoing wick boiling. The concentration effect can then result in localized attack of the metal surface beneath said porous deposits. Such attack will dissolve or gouge out a portion of the metal surface, lowering the yield and rupture strength, thus leading to rupture or fracture type failures of the metal undergoing heat transfer. In order to avoid such failures, steam generators must be maintained free of corrosion and other deposits by 1) minimizing corrosion in the system and/or 2) minimizing the deposition of the corrosion products found in the feedwater of the thermal system.

One means of minimizing the deposition of corrosion-forming solids is by dispersing the solids, such as corrosion products, that are found in feedwater thus avoiding fouling of heat input surfaces found in thermal system cycle. Over the years, many chemicals have been used for dispersing corrosion-forming solids in the feedwater. Early examples were inorganic phosphates, naturally derived and modified lignin, tannins, and carboxymethyl cellulose.

Later, synthetic polymers were developed to improve upon these modified natural derivative dispersants. One of the first generations of synthetic polymers was homopolymers, such as polyacrylamide, polyacrylate, and polymethylacrylate. Copolymers, terpolymers, and quadrapolymers were also developed with different monomeric functional groups wherein the ratios of these monomers and the average molecular weights of the final polymer were varied. The dispersant properties of these homopolymers, copolymers, terpolymers, and quadrapolymers are due to the use of anionic functionalities, nonionic functionalities or both (anionic/nonionic) functionalities in their backbone. The anionic monomer functionality can be derived from carboxylates, sulfonates, phosphonates, phosphinate, amido or acrylamide containing groups. The nonionic monomer functionality can be derived from vinyl acetate, ethylacrylate, tertbutylacrylamide, isobutylene, ethylene glycol, ethoxylate, alkyl, or aryl containing groups.

Examples of these dispersants include hydrolyzed or partially hydrolyzed acrylamides/acrylates, hydroxypropylacrylate, phosphino carboxylates, phosphonate functional polymers, polymaleates, sulfonated styrene/maleic anhydride copolymers, polycarboxylated phosphonates, acrylate/acrylamide copolymers, acrylate/maleic copolymers, acrylamido methyl propane sulfonate/acrylate (AMPS/AA) copolymers, maleic/isobutylene copolymers isopropenylphosphonic/alkyl or aryl copolymers, acrylic/maleic/AMPS terpolymers, acrylic/AMPS/t-butylacrylamide terpolymers, acrylic/maleic/vinyl acetate terpolymers, acrylic/methacrylic/t-butyl acrylamide terpolymers, acrylic/AMPS/styrene sulfonate terpolymers, acrylic/AMPS/phosphinate terpolymers, ethoxylated aryl sulfonate/alkyl sulfonate and acrylic acid quadrapolymers, hydroxylamine substituted polyacrylate/acrylamide copolymers, hydrazine substituted polyacrylate polymers and nonionic polymers used in steam generating systems.

Around the same time synthetic polymers were being investigated as solids dispersants, low molecular weight phosphonates were also being developed as solids dispersants. Examples of such phosphonates include aminotrimethylene phosphonic acid, hydroxyethylidene diphosphonic acid, phosphonobutane tricarboxylic acid, hexamethylene diamine tetramethylene phosphonic acid, diethylene triamine pentamethylene phosphonic acid, bis (hexamethylene) triamine phosphonic acid, ethanolamine diphosphonic acid, diaminocyclohexane tetrakis (methylene phosphonic acid), methylpentane diamine tetrakis (methylene phosphonic acid), bis-(hexamethylene) triamine phosphonic acid, phosphino succinic acid, phosphono tartaric acid, and phosphono glutaric acid.

It is known to use methyl ethyl ketoxime (MEKO) as an oxygen scavenger and metal passivator in boilers. See, for instance, U.S. Patent 4,487,745. This patent indicates that the amount of oxime used in treating boiler water is from 0.0001 ppm to 500 ppm, although commercial utility plant experience indicates that the typical dosage of MEKO used to control feedwater oxygen scavenging is from 30-80 ppb. MEKO controls corrosion in the feedwater circuit by scavenging oxygen and by establishing a corrosion-resistant oxide film on waterside metallic surfaces. In several cases, sodium polymethacrylate was present in the boiler to minimize the deposition of corrosion-forming solids, and MEKO was present in the boiler to scavenge oxygen.

### SUMMARY OF THE INVENTION

It has been discovered that the efficacy of well-known dispersants used to disperse corrosion products such as metal oxides in aqueous systems is enhanced by the addition of an oxime to the aqueous system. Thus, this invention relates to a metal oxides and corrosion products dispersant composition for aqueous systems comprising:
a) a metal oxides dispersant selected from the group consisting of water soluble, hydrolyzed or partially hydrolyzed, acrylamide/acrylate copolymers having anionic functionality; sulfonated styrene/maleic anhydride copolymers having anionic functionality; phosphonated nonionic alkyl polymers; phosphino carboxylates; and diethylenetriaminepentamethylene phosphonic acid; and
b) an effective amount of an oxime that enhances the dispersion efficacy of (a).

The invention also relates to a process for dispersing metal oxides in an aqueous system that involves adding the dispersant composition to the aqueous system. When practicing the process of this invention, it is possible to feed the metal oxides dispersant composition and the oxime separately to the point of contact, as long as they ultimately are mixed together. The effect of the process is to inhibit the fouling and subsequent corrosion of metal surfaces exposed to an aqueous system, in particular, the metal surface of a steam generator such as a boiler, heat recovery steam generator, evaporator, crystallizer, vapor re-compression equipment, or any vessel being cooled with water or water solution in which the heat input is capable of generating steam under a vacuum, pressure or atmospheric conditions.

Using the oximes in combination with a metal oxides dispersant increases the efficiency of the metal oxides dispersant in the aqueous system. The dispersant compositions are particularly useful when added to the feedwater of steam generating equipment. When so used, there is a decrease in the settling rate of suspended solids and/or an increase in the concentration of solids remaining in suspension. The practical effect is to prevent feedwater solids, such as corrosion products from depositing on the metal heat transfer surfaces in a steam generation system. The use of the dispersant composition and process will result in cost savings because there is less need for the cleaning of operating heat exchange equipment and premature failures due to overheats and corrosion. Further savings are also realized because heat inputted to the heat exchanging portions of the system are transferred more efficiently because less deposit fouling is incurred on the heat exchanger surfaces.

### BEST MODE AND OTHER MODES

The oximes used in the dispersant compositions are described in U.S. Patent 4,487,745, which is hereby incorporated by reference. They are shown by the following chemical structure: 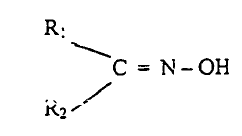 wherein R₁ and R₂ are the same or different and are selected from hydrogen, lower alkyl groups of 1-8 carbon atoms and aryl groups, and mixtures thereof, particularly aliphatic oximes. Most preferably used as the oxime is methyl ethyl ketoxime (MEKO). The oxime is preferably added to a feedpoint that will activate the oxime. Such feedpoints are those that will expose the oxime to a temperature of about 30°C to about 320°C.

For purposes of describing this invention, a "metal oxides dispersant" for an aqueous system is defined as a composition that increases the surface charge of metal oxides found in an aqueous system and has some effect on suspending the particle in the aqueous system. The metal oxides dispersant is as defined above. Metals of particular interest are iron, copper, nickel, and others that have more than one oxidation state. The metal oxides in the aqueous system can be from any source, including metal oxides formed as corrosion products in the aqueous system.

The metal oxides solids disperants used are selected from the group consisting of water soluble, hydrolyzed or partially hydrolyzed, acrylamide/acrylate copolymers having anionic functionality; sulfonated styrene/maleic anhydride copolymers having anionic functionality, phosphonated nonionic alkyl polymers; phosphino carboxylates; and diethylenetriaminepentamethylene phosphonic acid. For purposes of this invention, a polymer includes dimers and oligomers. A multifunctional polymer is a polymer derived from at least two different monomers or is a polymer having more than one functional group, where the functional group is an anionic or nonionic functional group. When the multifunctional polymer is derived from at least two monomers, at least two of the monomers are present in the amount of from 1:99 to 99:1. The nonionic monomer functionality is typically derived from vinyl acetate, ethylacrylate, tertbutylacrylamide, isobutylene, ethylene glycol, ethoxylate, alkyl, or aryl containing groups.

The metal oxides dispersants also include salts of any of the metal oxides, dispersants mentioned, mixtures thereof, or those modified for testability, traceability, or control using techniques such as "tagged polymers", "tracer" polymer dispersants, and "tracer" automated chemical testing and chemical feed control systems.

Preferably used are copolymers, terpolymers, and quadrapolymers selected from the group consisting of hydrolyzed or partially hydrolyzed acrylamides/acrylates (see U.S. Patent 4,001,161, which is hereby incorporated by reference), sulfonated styrene/maleic anhydride copolymers (see U.S. Patents 4.255,259 and 4,306,991).

Preferably used as the hydrolyzed or partially hydrolyzed acrylamides/acrylates are low molecular weight soluble polymers having an average molecular weight of 500-10,000, most preferably from 2000-6000. An example of a commercially available water-soluble hydrolyzed or partially hydrolyzed acrylamide/acrylates polymer is Cyanamer P-35 from Cytec Industries sold as a 50% aqueous solution. See U.S. Patent 4.001,161.

Preferably used as the sulfonated styrene/maleic anhydride copolymers are high molecular weight water-soluble polymers typically having an average molecular weight from 1,000 to 7,000,000, preferably from 5000 to 1,000,000, most preferably from 10,000 to 100,000. Examples of commercially available water-soluble sulfonated styrene/maleic anhydride copolymers are Versa TL-4 sold as a 25% aqueous solution, and Versa TL-3 sold as 95% solids. Both materials are available from Alco.

Also used on a preferable basis are water-soluble phosphinate solids dispersants, which are low molecular weight water-soluble phosphino carboxylate polymers or salts thereof having an average molecular weight from about 1,000 to 200,000, preferably from 2,000 to 5,000. See, for example, U.S. 4,692,317 and U.S. 2,957,931, which are hereby incorporated by reference. Such polymers are available from, among others, BIOLABS. Examples of commercially available water-soluble phosphino carboxylic polymers are DP-3385 sold as a 40% aqueous solution and Belsperse 161 soid as a 50 % aqueous solution, which are both available from BIOLABS.

The weight ratio of metal oxides dispersant to oxime is from 0.5:1 to 20:1, preferably from 0.5:1.0 to 5:1.

The typical residual of dispersant used in an aqueous system to inhibit metal oxide corrosion is from 1 to 100 ppm, more typically 2 to 50 ppm, preferably 5 to 25 ppm in the steam generator water. The preferable residual is based on the continuous feed of 100 ppb to 500 ppb (0.1-0.5 ppm) oxime in the feedwater and the boilers operating at 50 to 100 cycles with about 5 to 25 ppm active dispersant cycled up in the boiler. In other words, the dispersant is 0.05 to 0.25 ppm at 100 cycles to 0.1 to 0.5 ppm at 50 cycles in the feedwater.

Because the oxime is activated by heating at a temperature of at least 65°C, it is preferred to add the dispersant composition to a feedpoint in the steam generation system where the dispersant composition is heated before final steam generation. Typically, the dispersant composition is added to the bulk water, or pre-boiler section.

Although it is possible to use the subject process for treating other aqueous systems, it is particularly useful for treating boiler water because the pressure in a boiler causes significant amounts of metal oxide to deposit on metal surfaces.

### ABBREVIATIONS

| | |
|---|---|
| BELSPERSE | Belsperse 161, a phospinocarboxylate dispersant sold by BIOLABS. |
| DEQUEST | DEQUEST 2060 S, diethylenetriaminepentamethylene phosphonic acid, a dispersant sold by Solutia. |
| HACR | a hydrolyzed or partially hydrolyzed acrylamide/acrylate dispersant sold by Cytec Industries. |
| HTP-2 | phosphonated/nonionic alkyl polymeric dispersant sold by Betz Dearborn or Hercules Betz Dearborn. |
| MEKO | methyl ethyl ketoxime. |
| VERSA | VERSA-TL3 or VERSA-TL4, a sulfonated styrene/maleic anhydride copolymer dispersant sold by Alco. |

### EXAMPLES

The specific examples are merely illustrative of the invention, but are not intended to restrict the scope of the present invention.

The test results described in Table I were performed by activating MEKO; conditioning MEKO with iron oxide (Fe₂O₃) in a water bath to form conditioned MFKO/iron oxide; adding autoclaved dispersants to the conditioned MEKO/iron oxide blend to from MEKO/iron oxide/dispersant blends; and finally comparing the dispersion efficacy of MEKO/iron oxide/dispersant blends to that of MEKO/iron oxide, dispersant/iron oxide, and deionized water/iron oxide (Control) blends.

In order to better simulate use conditions in a boiler and see the effect of MEKO, MEKO was first activated by autoclaving MEKO for one hour at 166°C. MEKO solutions (36750-37000 ppm) were prepared using deionized water, which was previously sparged with nitrogen for about two hours and pH adjusted to 9.0 using borate buffer. The conditioning of the iron oxide was carried out by mixing dilute (963-971 ppm) activated MEKO with 0.2 gm of iron oxide in 100 ml of deionized water which was previously sparged with air, and pH adjusted to 10.5 ± 0.1. The blends of activated MEKO/iron oxide were kept in a water bath for about 43 hours. The temperature of the bath was maintained at ~ 85°C. In addition to MEKO/iron oxide blends, deionized water/iron oxide blends were placed in the water bath, which were used either as a blank (Control) or with the dispersants. All blends were shaken twice, for five minutes at high speed in the shaker after 18-19 hours and 23-24 hours in the water bath. The ratio of dispersant to iron oxide (boiler water solids; corrosion products) is an artifact of the laboratory test. The conditioning ratio of oxime to iron oxide was carried out at concentration ratios practiced in the field.

Known concentrations (1000 ± 10 ppm as solids/actives) of dispersants were prepared and pH adjusted to 10.5 ± 0.1. The dispersants were autoclaved for three hours at 260°C. After the conditioning of MEKO/iron oxide blends is completed, a known amount (9.5 - 9.8 ppm as solids/actives) of dispersants is added to some of the conditioned MEKO/iron oxide blends. The pH of the blends that consist of the control (blank)/iron oxide, MEKO/iron oxide, dispersant/iron oxide, and MEKO/iron oxide/dispersant was adjusted to 10 ± 0.1 using dilute caustic soda, or dilute acetic acid in the case of HTP-2. All blends were shaken for a total of 21 minutes. Portions are withdrawn from suspensions and transferred into spectrophotometer cells. After five minutes, absorbances are read at 450nm using Hatch DR/2000 spectrophotometer. High absorbance values indicate improved dispersion. The blank and MEKO values are the average of six absorbance readings collected throughout the evaluations. The dispersants and dispersants with MEKO values are the average of 2-3 absorbance readings. The results are set forth in Table I.

**TABLE 1**

| **DISPERSANT COMPOSITIONS AND THEIR EFFECT ON DISPERSION** | | |
|---|---|---|
| Example | Chemical | Absorbency (nm) |
| Control | None | ~*0.775* |
| A | MEKO | ~*0.700* |
| B | BELSPERSE | ~*0.800* |
| 1 | MEKO + *B* | ~*1.350* |
| C | HACR | ~0.900 |
| 2 | MEKO + *C* | ~1.650 |
| D | HTP-2 | ~*0.950* |
| 3 | MEKO + *D* | ~*1.650* |
| E | VERSA | ~*0.925* |
| 4 | MEKO + *E* | ~1.800 |
| F | DEQUEST | ~*0.820* |
| 5 | MEKO + *F* | ~*1.400* |

The data in Table I show that there is a significant increase in suspended solids in the solutions tested, if a mixture of MEKO and a metal oxides dispersant is used to disperse the iron oxide in the solution. Thus, MEKO enhances the functioning of the metal oxides dispersant. This suggests that less corrosion products will deposit on the internal surfaces, e.g. heat exchange surfaces, of a steam generating system that is treated with a dispersant composition containing both MEKO and a metal oxides dispersant.

## Claims

1. A metal oxides dispersant composition for aqueous systems comprising:
(a) a metal oxides dispersant selected from the group consisting of water soluble, hydrolyzed or partially hydrolyzed, acrylamide/acrylate copolymers having anionic functionality; sulfonated styrene/maleic anhydride copolymers having anionic functionality; phosphonated nonionic alkyl polymers; phosphino carboxylates; and diethylenetriaminepentamethylene phosphonic acid; and
(b) an effective amount of an oxime which enhances the dispersion efficacy of (a).

2. The composition of claim 1, wherein the metal oxides dispersant is a water soluble, hydrolyzed or partially hydrolyzed, acrylamidelacrylate copolymer having anionic functionality.

3. The composition of claim 1, wherein the metal oxides dispersant is a sulfonated styrene/maleic anhydride copolymer having anionic functionality.

4. The composition of claim 1, wherein the metal oxides dispersant is a phosphonated nonionic alkyl polymer.

5. The composition of claim 1, wherein the metal oxides dispersant is a phosphino carboxylate.

6. The metal oxides dispersant composition of any of the preceding claims, wherein the oxime is methyl ethyl ketoxime.

7. The metal oxides dispersant composition of any of the preceding claims, wherein the weight ratio of (a) to (b) is from 0.5 : 1 to 20 : 1.

8. The metal oxides dispersant composition of claim 7, wherein the weight ratio of (a) to (b) is from 0.5:1.0 to 5:1.

9. A process for inhibiting corrosion deposits from metal surfaces in contact with an aqueous system comprising:
adding a metal oxides dispersant composition to the aqueous system where the metal oxides dispersant composes:
(a) a metal oxides dispersant selected from the group consisting of water soluble, hydrolyzed or partially hydrolyzed, acrylamide/acrylate copolymers having anionic functionality; sulfonated styrene/maleic anhydride copolymers having anionic functionality; phosphonated nonionic alkyl polymers; phosphino carboxylates; and diethylenetriaminepentamethylene phosphonic acid; and
(b) an effective amount of an oxime which enhances the dispersion efficacy of (a);
whereby (a) and (b) can be added separately at the same location, or independent locations, or as a mixture to the aqueous system.

10. The process of claim 9, wherein the metal oxide is selected from the group consisting of oxides of iron, copper and nickel.

11. The process of claim 9, wherein the metal oxides dispersant is a water-soluble, hydrolyzed or partially hydrolyzed, acrylamide/acrylate copolymer having anionic functionality.

12. The process of claim 9, wherein the metal oxides dispersant is a sulfonated styrene/maleic anhydride copolymer having anionic functionality.

13. The process of claim 9, wherein the metal oxides dispersant is a phosphonated nonionic alkyl polymer.

14. The process of claim 9, wherein the metal oxides dispersant is a phosphino carboxylate.

15. The process of any of claims 9 to 14, wherein the oxime is methyl ethyl ketoxime.

16. The process of any of claims 9 to 15, wherein the weight ratio of (a) to (b) is from 0.5 : 1 to 20 : 1.

17. The process of claim 16, wherein the weight ratio of (a) to (b) is from 0.5 : 1.0 to 5 : 1.

18. The process of any of claims 9 to 17, wherein the metal surface is a heat exchange metal - surface of a steam generating system.

19. The process of claim 18, wherein the residual of the dispersant in the steam generator water is from 1 to 100 ppm.

20. The process of claim 19, wherein the residual of the dispersant in the steam generator water is from 2 to 50 ppm.

21. The process of claim 20, wherein the residual of the dispersant in the steam generator water is from 5 to 25 ppm.

22. The process of any of claims 9 to 21, wherein the oxime is added to a feedpoint which will expose the oxime to a temperature of at least 65 °C.

## Patentansprüche

1. Eine Metalloxid-Dispergiermittelzusammensetzung für wässrige Systeme, umfassend:
(a) ein Metalloxid-Dispergiermittel ausgewählt aus der Gruppe bestehend aus wasserlöslichen, hydrolysierten oder teilweise hydrolysierten Acrylamid/Acrylat-Copolymeren, welche eine anionische Funktionalität aufweisen; sulfonierten Styrol/Maleinsäureanhydrid-Copolymeren, welche eine anionische Funktionalität aufweisen; phosphonierten nichtionischen Alkylpolymeren; Phosphinocarboxylaten; und Diethylentriaminpentamethylenphosphonsäure; und
(b) eine wirksame Menge eines Oxims, welches die Dispergierwirkung von (a) erhöht.

2. Die Zusammensetzung gemäß Anspruch 1, wobei das Metalloxid-Dispergiermittel ein wasserlösliches, hydrolysiertes oder teilweise hydrolysiertes Acrylamid/Acrylat-Copolymer, welches eine anionische Funktionalität aufweist, ist.

3. Die Zusammensetzung gemäß Anspruch 1, wobei das Metalloxid-Dispergiermittel ein sulfoniertes Styrol/Maleinsäureanhydrid-Copolymer, welches eine anionische Funktionalität aufweist, ist.

4. Die Zusammensetzung gemäß Anspruch 1, wobei das Metalloxid-Dispergiermittel ein phosphoniertes nichtionisches Alkylpolymer ist.

5. Die Zusammensetzung gemäß Anspruch 1, wobei das Metalloxid-Dispergiermittel ein Phosphinocarboxylat ist.

6. Die Metalloxid-Dispergiermittelzusammensetzung gemäß einem der vorhergehenden Ansprüche, wobei das Oxim Methylethylketoxim ist.

7. Die Metalloxid-Dispergiermittelzusammensetzung gemäß einem der vorhergehenden Ansprüche, wobei das Gewichtsverhältnis von (a) zu (b) 0,5 : 1 bis 20 : 1 beträgt.

8. Die Metalloxid-Dispergiermittelzusammensetzung gemäß Anspruch 7, wobei das Gewichtsverhältnis von (a) zu (b) 0,5 : 1,0 bis 5 : 1 beträgt.

9. Ein Verfahren zur Verhinderung von Korrosionsablagerungen von Metalloberflächen, die mit einem wässrigen System in Kontakt stehen, umfassend:
Zugeben einer Metalloxid-Dispergiermittelzusammensetzung zu dem wässrigen System, wobei das Metalloxid-Dispergiermittel umfasst:
(a) ein Metalloxid-Dispergiermittel ausgewählt aus der Gruppe bestehend aus wasserlöslichen, hydrolysierten oder teilweise hydrolysierten Acrylamid/ Acrylat-Copolymeren, welche eine anionische Funktionalität aufweisen; sulfonierten Styrol/Maleinsäureanhydrid-Copolymeren, welche eine anionische Funktionalität aufweisen; phosphonierten nichtionischen Alkylpolymeren; Phosphinocarboxylaten; und Diethylentriaminpentamethylenphosphonsäure; und
(b) eine wirksame Menge eines Oxims, welches die Dispergierwirkung von (a) erhöht;
wobei (a) und (b) getrennt voneinander an derselben Stelle oder an unabhängigen Stellen oder als ein Gemisch zu dem wässrigen System gegeben werden können.

10. Das Verfahren gemäß Anspruch 9, wobei das Metalloxid aus der Gruppe bestehend aus Oxiden von Eisen, Kupfer und Nickel ausgewählt ist.

11. Das Verfahren gemäß Anspruch 9, wobei das Metalloxid-Dispergiermittel ein wasserlösliches, hydrolysiertes oder teilweise hydrolysiertes Acrylamid/Acrylat-Copolymer, welches eine anionische Funktionalität aufweist, ist.

12. Das Verfahren gemäß Anspruch 9, wobei das Metalloxid-Dispergiermittel ein sulfoniertes Styrol/Maleinsäureanhydrid-Copolymer, welches eine anionische Funktionalität aufweist, ist.

13. Das Verfahren gemäß Anspruch 9, wobei das Metalloxid-Dispergiermittel ein phosphoniertes nichtionisches Alkylpolymer ist.

14. Das Verfahren gemäß Anspruch 9, wobei das Metalloxid-Dispergiermittel ein Phosphinocarboxylat ist.

15. Das Verfahren gemäß einem der Ansprüche 9 bis 14, wobei das Oxim Methylethylketoxim ist.

16. Das Verfahren gemäß einem der Ansprüche 9 bis 15, wobei das Gewichtsverhältnis von (a) zu (b) 0,5 : 1 bis 20 : 1 beträgt.

17. Das Verfahren gemäß Anspruch 16, wobei das Gewichtsverhältnis von (a) zu (b) 0,5 : 1,0 bis 5 : 1 beträgt.

18. Das Verfahren gemäß einem der Ansprüche 9 bis 17, wobei die Metalloberfläche eine Wärmeaustausch-Metalloberfläche eines Dampferzeugungssystems ist.

19. Das Verfahren gemäß Anspruch 18, wobei der Restwert des Dispergiermittels im Wasser des Dampferzeugers 1 bis 100 ppm beträgt.

20. Das Verfahren gemäß Anspruch 19, wobei der Restwert des Dispergiermittels im Wasser des Dampferzeugers 2 bis 50 ppm beträgt.

21. Das Verfahren gemäß Anspruch 20, wobei der Restwert des Dispergiermittels im Wasser des Dampferzeugers 5 bis 25 ppm beträgt.

22. Das Verfahren gemäß einem der Ansprüche 9 bis 21, wobei das Oxim an einem Beschickungspunkt zugegeben wird, welcher das Oxim einer Temperatur von mindestens 65°C aussetzen wird.

## Revendications

1. Composition de dispersant d'oxydes métalliques pour des systèmes aqueux comprenant :
(a) un dispersant d'oxydes métalliques sélectionné dans le groupe constitué des copolymères d'acrylamide/acrylate solubles dans l'eau, hydrolysés ou partiellement hydrolysés, ayant une fonctionnalité anionique ; des copolymères de styrène/anhydride maléique sulfonés, ayant une fonctionnalité anionique ; des polymères alkyliques phosphonés non ioniques ; des phosphinocarboxylates ; et de l'acide diéthylènetriaminepentaméthylène-phosphonique ; et
(b) une quantité efficace d'un oxime qui renforce l'efficacité de dispersion du composé (a).

2. Composition selon la revendication 1, dans laquelle le dispersant d'oxydes métalliques est un copolymère d'acrylamide/acrylate soluble dans l'eau, hydrolysé ou partiellement hydrolysé, ayant une fonctionnalité anionique.

3. Composition selon la revendication 1, dans laquelle le dispersant d'oxydes métalliques est un copolymère de styrène/anhydride maléique sulfoné ayant une fonctionnalité anionique.

4. Composition selon la revendication 1, dans laquelle le dispersant d'oxydes métalliques est un polymère alkylique phosphoné non ionique.

5. Composition selon la revendication 1, dans laquelle le dispersant d'oxydes métalliques est un phosphinocarboxylate.

6. Composition de dispersant d'oxydes métalliques selon l'une quelconque des revendications précédentes, dans laquelle l'oxime est le méthyl-éthylcétoxime.

7. Composition de dispersant d'oxydes métalliques selon l'une quelconque des revendications précédentes, dans laquelle le rapport pondéral du composé (a) au composé (b) se situe dans la plage de 0,5:1 à 20:1.

8. Composition de dispersant d'oxydes métalliques selon la revendication 7, dans laquelle le rapport pondéral du composé (a) au composé (b) se situe dans la plage de 0,5:1,0 à 5:1.

9. Procédé pour inhiber des dépôts de corrosion sur des surfaces métalliques en contact avec un système aqueux, comprenant l'étape consistant à :
ajouter une composition de dispersant d'oxydes
métalliques au système aqueux, le dispersant d'oxydes métalliques comprenant :
(a) un dispersant d'oxydes métalliques sélectionné dans le groupe constitué des copolymères d'acrylamide/acrylate solubles dans l'eau, hydrolysés ou partiellement hydrolysés, ayant une fonctionnalité anionique ; des copolymères de styrène/anhydride maléique sulfonés ayant une fonctionnalité anionique ; des polymères alkyliques phosphonés non ioniques ; des phosphinocarboxylates ; et de l'acide diéthylènetriaminepentaméthylène-phosphonique ; et
(b) une quantité efficace d'un oxime qui renforce l'efficacité de dispersion du composé (a) ;
de sorte que les composés (a) et (b) puissent être ajoutés séparément au même emplacement ou à des emplacements indépendants, ou sous la forme d'un mélange, au système aqueux.

10. Procédé selon la revendication 9, dans lequel l'oxyde métallique est sélectionné dans le groupe constitué des oxydes de fer, de cuivre et de nickel.

11. Procédé selon la revendication 9, dans lequel le dispersant d'oxydes métalliques est un copolymère d'acrylamide/acrylate soluble dans l'eau, hydrolysé ou partiellement hydrolysé, ayant une fonctionnalité anionique.

12. Procédé selon la revendication 9, dans lequel le dispersant d'oxydes métalliques est un copolymère de styrène/anhydride maléique sulfoné ayant une fonctionnalité anionique.

13. Procédé selon la revendication 9, dans lequel le dispersant d'oxydes métalliques est un polymère alkylique phosphoné non ionique.

14. Procédé selon la revendication 9, dans lequel le dispersant d'oxydes métalliques est un phosphinocarboxylate.

15. Procédé selon l'une quelconque des revendications 9 à 14, dans lequel l'oxime est le méthyléthylcétoxime.

16. Procédé selon l'une quelconque des revendications 9 à 15, dans lequel le rapport pondéral du composé (a) au composé (b) se situe dans la plage de 0,5:1 à 20:1.

17. Procédé selon la revendication 16, dans lequel le rapport pondéral du composé (a) au composé (b) se situe dans la plage de 0,5:1,0 à 5:1.

18. Procédé selon l'une quelconque des revendications 9 à 17, dans lequel la surface métallique est une surface métallique d'échange de chaleur d'un système générateur de vapeur d'eau.

19. Procédé selon la revendication 18, dans lequel la partie résiduelle du dispersant dans l'eau du générateur de vapeur d'eau est de 1 à 100 ppm.

20. Procédé selon la revendication 19, dans lequel la partie résiduelle du dispersant dans l'eau du générateur de vapeur d'eau est de 2 à 50 ppm.

21. Procédé selon la revendication 20, dans lequel la partie résiduelle du dispersant dans l'eau du générateur de vapeur d'eau est de 5 à 25 ppm.

22. Procédé selon l'une quelconque des revendications 9 à 21, dans lequel on ajoute l'oxime à un point de l'alimentation qui exposera l'oxime à une température d'au moins 65 °C.
